# EUROPÄISCHE PATENTSCHRIFT

(11) **EP 4 000 856 B1**
(45) Veröffentlichungstag und Bekanntmachung des Hinweises auf die Patenterteilung: **08.05.2024**
(21) Anmeldenummer: 20207332.6
(22) Anmeldetag: 12.11.2020
(51) Int. Cl.: B29C 44/50, B29C 44/46, B29C 48/325, B29C 48/10, B29C 48/00, B29C 48/92

(54) **RINGDÜSE**
ANNULAR NOZZLE
BUSE ANNULAIRE

(43) Veröffentlichungstag der Anmeldung: 25.05.2022
(73) Patentinhaber: Promix Solutions AG, 8406 Winterthur (CH)
(72) Erfinder: Heusser, Rolf, 8400 Winterthur (CH)
(74) Vertreter: Herrmann, Johanna

(56) Entgegenhaltungen:
- EP-A1- 0 435 078
- EP-A2- 1 023 984
- US-A- 3 751 537
- US-A1- 2006 125 132
- US-A1- 2006 165 835
- US-A1- 2019 001 546

## Beschreibung

### Hintergrund

Die vorliegende Erfindung betrifft eine Ringdüse, die zur Herstellung einer Folie verwendet wird. Insbesondere kann mittels der Ringdüse die Dicke der Folie eingestellt werden, beispielsweise einer Kunststofffolie, insbesondere einer geschäumten Kunststofffolie. Bei der Herstellung von geschäumten Kunststofffolien aus einer Kunststoffschmelze, zum Beispiel PE, PP oder PS, kommen sogenannte Ringdüsen zum Einsatz. Die mit Treibmittel beladene Kunststoffschmelze tritt als Schlauch aus der Ringdüse aus und schäumt dabei auf. Während des Aufschäumens vergrössert sich die Foliendicke erheblich. Daher ist es schwierig, die Dicke der geschäumten Folie an jeder Stelle des den Umfang ausbildenden Querschnitts exakt gleich zu halten, mit anderen Worten, einen Folienquerschnitt mit konstanter Dicke herzustellen.

### Stand der Technik

Die Dicke der Folie einer geschäumten Folie, die aus einer Ringdüse austritt, kann mittels einer Flexlippe eingestellt werden. Eine Flexlippe bezeichnet eine Wand, die einen Ringspalt begrenzt, der die Ringdüse ausbildet. Durch den Ringspalt tritt die schäumbare Folie aus, um eine geschäumte Folie auszubilden. Die Spaltbreite kann mit Einstellmitteln verändert werden, sodass geschäumte Folien mit beliebiger Dicke hergestellt werden können. Als Einstellmittel kommen beispielsweise gemäss US 7296991 B2 oder US2006/125132 A1 Gewindestifte zum Einsatz. Die Gewindestifte stehen im Eingriff mit einem Keil, der ein Ende aufweist, welches auf die Flexlippe drückt. Das andere Ende kann mittels des Gewindestifts in seiner Position derart verändert werden, dass mittels des Keils unterschiedlich grosse Druckkräfte auf die Flexlippe übertragbar sind. Die Flexlippe wird je nach der Grösse der Druckkraft verformt, sodass sich die Spaltbreite des Ringspalts verändert. Es ist auch aus EP1023984 A2 bekannt, anstelle der Keile eine Hülse mittels eines Gewindestifts zu verstellen.

Um die Spaltbreite des Ringspalts einzustellen, wird eine Mehrzahl von Keilen mit einer entsprechenden Anzahl Gewindestiften am Umfang der Flexlippe angeordnet. Die Flexlippe wird segmentweise mit den Keilen an der Druckstelle angedrückt, wobei die Position der Flexlippe durch die Drehbewegung des Gewindestifts angepasst wird.

Allerdings gleiten Keile beim Lösen der Gewindestifte zur Vergrösserung der Spaltbreite nicht automatisch zurück in ihre frühere Position, da die Krafteinleitung fast senkrecht zur Gegenfläche erfolgt und die beiden Flächen statisch zueinander angeordnet sind. Daher besteht die Gefahr, dass die Keile nicht zurückgleiten, sondern in ihrer Position verbleiben, sodass nur der Gewindestift aus der im Keil befindlichen Bohrung herausgedreht wird. Daher muss in der Praxis beim Öffnen des Ringspalts bei jedem Gewindestift ein Schlag mit einem Hammer erfolgen, um sicher zu stellen, dass die Keile in die vorgesehene Position zurückgleiten. Würde ein steilerer Winkel gewählt werden, könnte diesem Mangel zwar abgeholfen werden, allerdings verringert sich die Einstellgenauigkeit. Wenn die Spaltbreite um nicht mehr als 0.1 mm von der gewünschten Spaltbreite abweichen darf, kann die erforderliche Einstellgenauigkeit nicht mehr gewährleistet werden, daher eignet sich diese Modifikation nicht für Ringdüsen, deren Spaltbreiten innerhalb dieser engen Toleranzen liegen müssen. Als weiterer Nachteil dieser vorbekannten Vorrichtung ist deren aufwändige Herstellung anzusehen, weil nicht auf Normteile, wie beispielsweise Stangenmaterial, zurückgegriffen werden kann.

Die austretende Kunststoffschmelze übt zudem einen erheblichen Druck auf die Flexlippe aus, die durch die Gewindestifte aufgenommen werden muss. Daher hat es sich als schwierig erwiesen, eine Lösung zu finden, die gut zugänglich ist, bei der die Gewindestifte auch im Betrieb ohne übermässigen Kraftaufwand verstellt werden können und der Einstellweg genügend klein ist, um eine exakte Einstellung zu gewährleisten.

### Aufgabe der Erfindung

Aufgabe der Erfindung ist es, eine Vorrichtung zur Einstellung der Dicke einer Kunststofffolie zu entwickeln, mittels welcher die korrekte Position der Flexlippe im Betrieb leicht, exakt und sicher einstellbar ist.

### Beschreibung der Erfindung

Die Lösung der Aufgabe der Erfindung erfolgt durch eine Ringdüse gemäss Anspruch 1. Die Ringdüse findet bevorzugt Verwendung in der Herstellung von Folien aus geschäumten Kunststoffen. Vorteilhafte Ausführungsbeispiele der Ringdüse sind Gegenstand der Ansprüche 2 bis 13.

Die Verwendung der Ringdüse zur Herstellung einer geschäumten Kunststofffolie ist Gegenstand von Anspruch 14. Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für die erfindungsgemässe Ringdüse. Die Beschreibung einer bestimmten Ringdüse ist nur als beispielhaft anzusehen. In der Beschreibung und den Ansprüchen werden die Begriffe "enthalten", "umfassen", "aufweisen" als "enthalten, aber nicht beschränkt auf" interpretiert.

Die Aufgabe der Erfindung wird dadurch gelöst, dass ein Gewindestift auf einen Bolzen drückt, der dann auf die Flexlippe drückt. Unter einer Flexlippe wird ein flanschartiger Abschnitt des Düsenkörpers verstanden, der bei Aufbringung einer Druckkraft um einen im Düsenkörper befindlichen Drehpunkt drehbar ist, indem sich die Flexlippe elastisch verformt. Unter einer elastischen Verformung wird eine Verformung verstanden, die bei Wegfall der Druckkraft wieder verschwindet. Die Verformung der Flexlippe ist somit reversibel.

Eine erfindungsgemässe Ringdüse enthält einen Düsenkörper, wobei der Düsenkörper mindestens einen Ringspalt zum Austritt einer Folie umfasst. Der Ringspalt ist von einer ortfesten Wand und einer Flexlippe seitlich begrenzt. Im Düsenkörper ist eine Mehrzahl von Gewindestiften und eine Mehrzahl von Bolzen angeordnet. Die Gewindestifte sind in einer ersten Bohrung im Düsenkörper drehbar gelagert. Die Bolzen sind im Düsenkörper in einer zweiten Bohrung des Düsenkörpers verschiebbar gelagert. Jeder der Bolzen steht mit der Flexlippe und dem entsprechenden Gewindestift in Berührung, sodass eine Druckkraft vom Gewindestift auf den Bolzen und über den Bolzen auf die Flexlippe übertragbar ist. Die Folie kann insbesondere eine Kunststofffolie umfassen. Beispielsweise kann die Folie eine schäumbare oder geschäumte Kunststofffolie umfassen. Gemäss eines Ausführungsbeispiels kann die Dichte der geschäumten Folie zwischen 15 und 300 kg/m³ betragen.

Erfindungsgemäss wird von der ortsfesten Wand und der Flexlippe die Spaltbreite des Ringspalts festgelegt. Der Ringspalt kann als keilförmiger Spalt ausgebildet sein, das heisst die ortsfeste Wand und die Flexlippe weisen in Richtung der ausströmenden Kunststoffschmelze zunehmenden oder abnehmenden Abstand zueinander auf. Der Öffnungswinkel wird durch die auf die Flexlippe wirkende Druckkraft, die vom Bolzen auf die Flexlippe ausgeübt wird, verändert. Insbesondere kann mit der Flexlippe eine Dickentoleranz von weniger als 0.1 mm eingestellt werden.

Da der Bolzen und der Gewindestift in ihren entsprechenden Bohrungen zwangsgeführt sind, korreliert eine Umdrehung des Gewindestifts exakt mit der Verschiebung des Bolzens um ein bestimmtes Längenmass und dementsprechend mit einer bestimmten Spaltbreite des Ringspalts und/oder einem bestimmten Öffnungswinkel zwischen der ortsfesten Wand und der Flexlippe. Unter Umdrehung ist eine Drehbewegung um einen Winkel von 360 Grad zu verstehen. Der Öffnungswinkel wird durch eine Drehung des Gewindestifts im Innengewinde der ersten Bohrung zwangsverstellt. Je weiter der Gewindestift in das Gewinde hineingedreht wird, desto grösser wird die auf die Flexlippe wirkende Druckkraft. Die Flexlippe wird durch die Druckkraft aus ihrer Initialposition ausgelenkt.

Wenn die Druckkraft durch Lösen des Gewindestifts wieder verringert wird, federt die Flexlippe in ihre Ursprungsposition zurück und schiebt den Bolzen zurück in die Initialposition. Durch den Gegendruck der Flexlippe auf den Bolzen wirkende Rückstellkraft kann immer eine exakte Position der Flexlippe relativ zur ortsfesten Wand sichergestellt werden, da der Bolzen sich nur soweit zurückbewegen kann, wie es die Position des Gewindestifts zulässt. Durch den Winkel zwischen dem Gewindestift und dem Bolzen kann zudem der Vorschubweg bezogen auf eine Umdrehung des Gewindestifts beliebig definiert werden. Der Gewindestift kann insbesondere einen als Konus ausgebildeten Endbereich aufweisen. Je steiler der Konuswinkel gewählt wird, desto exakter kann die Einstellung der Spaltbreite vorgenommen werden. Der Konuswinkel kann insbesondere im Bereich von 10 Grad bis einschliesslich 80 Grad liegen. Gemäss eines Ausführungsbeispiels beträgt der Konuswinkel 10 Grad bis einschliesslich 60 Grad. Gemäss eines Ausführungsbeispiels beträgt der Konuswinkel 10 Grad bis einschliesslich 40 Grad. Insbesondere entspricht die Steigung des Konus der Ausrichtung der dem Gewindestift zugewendeten Endfläche des Bolzens, sodass ein linienförmiger Kontakt zwischen dem Bolzen und dem Gewindestift ermöglicht ist. Der Bolzen weist ein erstes Ende auf, welches eine erste Auflagefläche enthält. Der Bolzen weist ein zweites Ende auf, welches eine zweite Auflagefläche enthält. Die erste Auflagefläche, die beliebig ausgebildet sein kann, liegt mindestens teilweise auf der Flexlippe auf. Die zweite Auflagefläche liegt zumindest teilweise entlang einer gemeinsamen Berührungslinie am Gewindestift an, oder auf einer Keilfläche eines Keilelements auf. Insbesondere liegt die zweite Auflagefläche des Bolzens auf dem als Konus ausgebildeten Endbereich des Gewindestifts auf. Insbesondere sind der Bolzen und der Gewindestift in einem Winkel zueinander angeordnet. Der Winkel kann im Bereich von 90 bis maximal 180 Grad liegen. Gemäss eines Ausführungsbeispiels beträgt die Anzahl der Gewindestifte sowie der zugehörigen Bolzen mindestens je 10. Gemäss eines Ausführungsbeispiels ist jeder der Gewindestifte in einem Winkel von maximal 30 Grad zur Radialrichtung angeordnet. Gemäss eines Ausführungsbeispiels ist jeder der Bolzen senkrecht zur Flexlippe mit einer Abweichung von maximal 30 Grad von der Senkrechten zur Flexlippe angeordnet. Gemäss eines Ausführungsbeispiels ist jeder der Bolzen um bis zu 10 mm in der zweiten Bohrung verschiebbar.

Gemäss eines Ausführungsbeispiels beträgt die Anzahl der Gewindestifte sowie der zugehörigen Bolzen mindestens je 10. Gemäss eines Ausführungsbeispiels ist jeder der Gewindestifte in einem Winkel von maximal 30 Grad zur Radialrichtung angeordnet. Gemäss eines Ausführungsbeispiels ist jeder der Bolzen senkrecht zur Flexlippe mit einer Abweichung von maximal 30 Grad von der Senkrechten zur Flexlippe angeordnet. Gemäss eines Ausführungsbeispiels ist jeder der Bolzen um bis zu 10 mm in der zweiten Bohrung verschiebbar.

Gemäss eines Ausführungsbeispiels enthält die zweite Bohrung einen Anschlag, mittels welchem der Verschiebeweg des Bolzens begrenzbar ist. Insbesondere weist der Bolzen einen kreisförmigen Querschnitt auf. Gemäss eines Ausführungsbeispiels enthält der Bolzen einen Absatz. Dieser Absatz ist gemäss dieses Ausführungsbeispiels zur Auflage auf einen Anschlag im Düsenkörper ausgebildet. Ein Verfahren zur Einstellung einer Spaltbreite eines Ringspalts zum Austritt einer Kunststoffschmelze aus einer Ringdüse, wobei die Ringdüse einen Düsenkörper umfasst, der den Ringspalt enthält, wobei der Ringspalt von einer ortsfesten Wand und einer Flexlippe seitlich begrenzt ist, wobei im Düsenkörper eine Mehrzahl von Gewindestiften und eine entsprechende Anzahl Bolzen angeordnet ist, wobei jeder der Gewindestifte in einer ersten Bohrung im Düsenkörper drehbar gelagert ist, wobei jeder der Bolzen im Düsenkörper in einer zweiten Bohrung des Düsenkörpers verschiebbar gelagert ist, wobei der Bolzen mit der Flexlippe und dem entsprechenden Gewindestift in Berührung steht, wobei eine Druckkraft vom Gewindestift auf den Bolzen und über den Bolzen auf die Flexlippe übertragen wird, wenn der Gewindestift in die erste Bohrung des Düsenkörpers bewegt wird.

Erfindungsgemäß enthält jeder der Bolzen ein erstes Ende, welches eine erste Auflagefläche enthält und ein zweites Ende, welches eine zweite Auflagefläche enthält, wobei die erste Auflagefläche mindestens teilweise auf der Flexlippe aufliegt und die zweite Auflagefläche zumindest teilweise entlang einer Berührungslinie am Gewindestift anliegt. Die erste Auflagefläche steht mit der Flexlippe in Kontakt. Die zweite Auflagefläche stehe mit dem entsprechenden Gewindestift in Kontakt, sodass bei Drehung des Gewindestifts eine Verschiebung des Bolzens in der zweiten Bohrung erfolgt. Die erste Bohrung ist zur Aufnahme des Gewindestifts bestimmt und enthält ein Gewinde, sodass der Gewindestift durch eine Drehbewegung in die erste Bohrung hineinbewegt werden kann oder durch eine Drehbewegung in entgegengesetzter Richtung aus der zweiten Bohrung herausbewegt werden kann.

Ein Vorteil der erfindungsgemässen Vorrichtung sowie des zugehörigen Verfahrens ist darin zu sehen, dass sie eine exakte Einstellung der Spaltbreite des Ringspalts ermöglicht.

Eine Ringdüse nach einem der vorhergehenden Ausführungsbeispiele kann insbesondere zur Herstellung geschäumter Kunststofffolien verwendet werden.

### Kurzbeschreibung der Zeichnungen

Nachfolgend wird das erfindungsgemässe System anhand einiger Ausführungsbeispiele dargestellt. Es zeigen
Fig. 1 einen Schnitt durch die obere Hälfte einer erfindungsgemässen Ringdüse nach einem ersten Ausführungsbeispiel,
Fig. 2 eine Ansicht einer Ringdüse nach dem ersten Ausführungsbeispiel,
Fig. 3 einen Schnitt durch die obere Hälfte einer erfindungsgemässen Ringdüse nach einem zweiten Ausführungsbeispiel,
Fig. 4 einen Teilschnitt durch eine erfindungsgemässe Ringdüse nach einem dritten Ausführungsbeispiel,
Fig. 5 einen Teilschnitt durch eine Ringdüse nach einem vierten Ausführungsbeispiel,
Fig. 6 eine Ansicht der Ringdüse nach dem dritten oder vierten Ausführungsbeispiel.

### Detaillierte Beschreibung der Zeichnungen

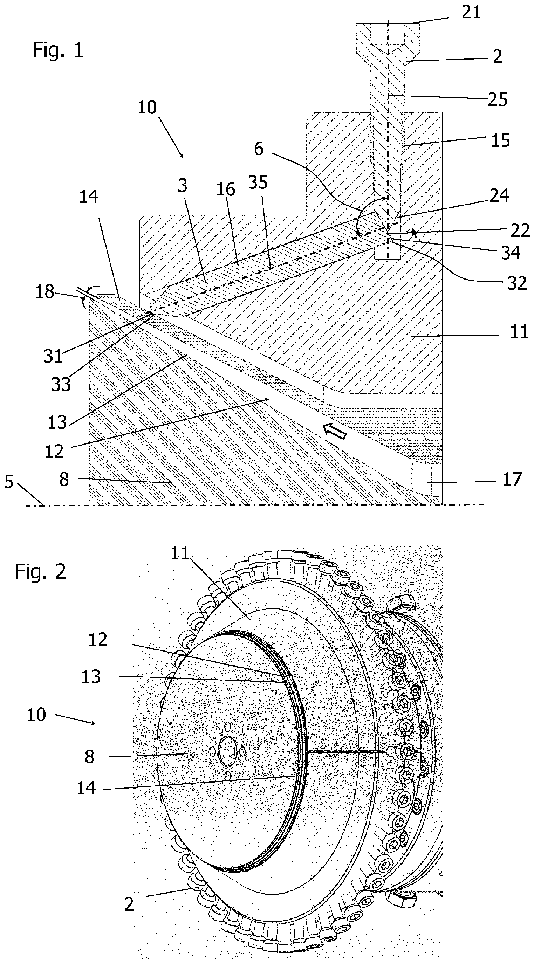

Fig. 1 zeigt einen Schnitt durch die obere Hälfte einer Ringdüse 10 gemäss eines ersten Ausführungsbeispiels der Erfindung. Die Ringdüse 10 enthält einen Düsenkörper 11. Der Düsenkörper 11 umfasst mindestens einen Ringspalt 12 zum Austritt einer Folie, wobei der Ringspalt 12 von einer ortfesten Wand 13 und einer Flexlippe 14 seitlich begrenzt ist. Im Düsenkörper 11 ist eine Mehrzahl von Gewindestiften 2 und eine entsprechende Anzahl Bolzen 3 angeordnet, wobei jeder der Gewindestifte 2 in einer ersten Bohrung 15 im Düsenkörper 11 drehbar gelagert ist. In der vorliegenden Darstellung ist nur ein einziger Gewindestift 2 gezeigt, die dahinter liegenden Gewindestifte 2 sind in dieser Darstellung der Einfachheit halber weggelassen.

Jeder der Bolzen 3 ist im Düsenkörper 11 in einer zweiten Bohrung 16 des Düsenkörpers 11 verschiebbar gelagert. Der Bolzen 3 ist mit der Flexlippe 14 und dem entsprechenden Gewindestift 2 in Kontakt. Eine Druckkraft ist vom Gewindestift 2 auf den Bolzen 3 und über den Bolzen 3 auf die Flexlippe 14 übertragbar. Der Gewindestift 2 drückt auf den Bolzen 3 und der Bolzen 3 drückt auf die Flexlippe 14, um deren Position relativ zur ortsfesten Wand 13 zu verändern. Daher liegt der Bolzen 3 auf der Flexlippe 14 auf, der Bolzen 3 ist aber mit der Flexlippe 14 nicht verbunden, das heisst, es besteht keine stoffliche Verbindung zwischen dem Bolzen 3 und der Flexlippe 14. Der Bolzen 3 und der Gewindestift 2 liegen ebenfalls aneinander an. Der Bolzen 3 ist ebenfalls nicht mit dem Gewindestift 2 verbunden, das heisst, es besteht keine stoffliche Verbindung zwischen dem Bolzen 3 und dem Gewindestift 2.

Gemäss des vorliegenden Ausführungsbeispiels weist der Bolzen 3 ein erstes Ende 31 enthaltend eine erste Auflagefläche 33 und ein zweites Ende 32 enthaltend eine zweite Auflagefläche 34 auf. Die erste Auflagefläche 33 liegt mindestens teilweise auf der Flexlippe 14 auf und die zweite Auflagefläche 34 liegt zumindest teilweise entlang einer gemeinsamen Berührungslinie am Gewindestift 2 an.

Insbesondere sind der Bolzen 3 und der Gewindestift 2 in einem stumpfen Winkel 6 zueinander angeordnet. Der Bolzen 3 und der Gewindestift 2 sind insbesondere als rotationssymmetrische Bauteile ausgebildet. Der Bolzen 3 weist eine Bolzenmittenachse 35 auf, wenn er als rotationssymmetrisches Bauteil ausgebildet ist. Der Gewindestift 2 weist eine Gewindestiftmittenachse 25 auf, wenn er als rotationssymmetrisches Bauteil ausgebildet ist. Gemäss dieses Ausführungsbeispiels spannen die Bolzenmittenachse 35 und die Gewindestiftmittenachse 25 eine gemeinsame Ebene auf, die in Fig. 1 der Schnittebene für den dargestellten Gewindestift 2 und den entsprechenden Bolzen 3 entspricht. Der stumpfe Winkel 6 kann im Bereich von 100 Grad bis maximal 180 Grad liegen. Durch den Winkel 6 zwischen dem Gewindestift 2 und dem Bolzen 3 kann zudem der Vorschubweg beliebig definiert werden. Der stumpfe Winkel 6 wird zwischen der Bolzenmittenachse 35 und der Gewindestiftmittenachse 25 aufgespannt.

Der Gewindestift umfasst ein erstes Ende 21 und ein gegenüberliegendes zweites Ende 22. Das erste Ende 21 ist ausgebildet, um mit einem Werkzeug, im vorliegenden Beispiel mit einem Inbusschlüssel, eine Drehbewegung um die als Drehachse wirkende Gewindestiftmittenachse 25 auszuführen. Die erste Bohrung 15 weist ein Innengewinde auf, welches mit einem am Umfang des Gewindestifts 2 befindlichen Aussengewinde in Eingriff steht.

Der Gewindestift 2 kann im Bereich des zweiten Endes 22 insbesondere eine als Konus ausgebildete zweite Auflagefläche 24 aufweisen. Je steiler der Konuswinkel 26 des Konus gewählt wird, desto exakter kann die Einstellung der Spaltbreite des Ringspalts 12 vorgenommen werden. Der Konuswinkel 26 kann insbesondere im Bereich von 10 Grad bis 80 Grad liegen, vorzugsweise beträgt der Konuswinkel 10 bis 60 Grad, besonders bevorzugt beträgt der Konuswinkel 10 bis 40 Grad. Insbesondere entspricht die Steigung des Konus der Ausrichtung der zweiten Auflagefläche 34 des Bolzens 3, sodass ein linienförmiger Kontakt zwischen der zweiten Auflagefläche 34 des Bolzens 3 und der zweiten Auflagefläche 24 des Gewindestifts 2 ermöglicht ist.

Fig. 1 zeigt auch einen Kanal 17, welcher zur Förderung eines fluiden Mediums dient, beispielsweise einer Kunststoffschmelze für die Herstellung einer Kunststofffolie, insbesondere einer geschäumten Kunststofffolie. Unter einem fluiden Medium wird ein beliebiges fliessfähiges Medium verstanden, beispielsweise ein flüssiges Medium oder ein mehrphasiges Medium, beispielsweise eine Emulsion, ein Slurry, eine Lösung. Ein mehrphasiges Medium kann eine beliebige Kombination bestehend aus mindestens einer Flüssigkeit, einem Gas oder einem Feststoff umfassen.

Der Kanal 17 ist durch den Düsenkörper 11 geführt und mündet in den Ringspalt 12. Der Ringspalt 12 wird wie im vorhergehenden Ausführungsbeispiel von einer ortsfesten Wand 13 und einer Flexlippe 14 begrenzt.

Der Ringspalt 12 wird von der ortsfesten Wand 13 und der spaltseitigen Seitenwand der Flexlippe 14 begrenzt. Durch die ortsfeste Wand 13 und die spaltseitige Seitenwand der Flexlippe 14 wird somit die Spaltbreite des Ringspalts 12 festgelegt. Der Ringspalt 12 kann als keilförmiger Spalt ausgebildet sein, das heisst, die ortsfeste Wand 13 und die spaltseitige Seitenwand der Flexlippe 14 weisen in Richtung des ausströmenden fluiden Mediums abnehmenden Abstand zueinander auf. Der Öffnungswinkel 18 wird durch die auf die Flexlippe 14 wirkende Druckkraft, die vom Bolzen 2 auf die Flexlippe 14 ausgeübt wird, verändert. Die Strömungsrichtung des fluiden Mediums ist mit einem im Kanal 17 angeordneten Pfeil gekennzeichnet.

Gemäss des in Fig. 1 dargestellten Ausführungsbeispiels ist die Flexlippe 14 als ein Ringelement ausgebildet. Gemäss einer nicht dargestellten Variante kann das Ringelement mittels eines Befestigungselements am Düsenkörper 11 oder an einem die ortsfeste Wand 13 tragenden Zentralkörper 8 befestigt werden.

Da der Bolzen 3 und der Gewindestift 2 in ihren entsprechenden Bohrungen 15, 16 zwangsgeführt sind, korreliert eine Umdrehung des Gewindestifts 2 exakt mit der Verschiebung des Bolzens 3 um ein bestimmtes Längenmass und dementsprechend mit einer bestimmten Spaltbreite des Ringspalts 12 und/oder einem bestimmten Öffnungswinkel 18 zwischen der ortsfesten Wand 13 und der Flexlippe 14. Wenn der Ringspalt 3 als keilförmiger Spalt ausgebildet ist, wird der Öffnungswinkel 18 durch jede Drehung des Gewindestifts im Innengewinde der ersten Bohrung 15 zwangsverstellt. Je weiter der Gewindestift 2 in das Innengewinde der Bohrung 15 hineingedreht wird, desto grösser wird die auf die Flexlippe 14 wirkende Druckkraft. Die Flexlippe 14 wird durch die Druckkraft aus ihrer Initialposition ausgelenkt. In Fig. 1 ist eine Zwischenposition dargestellt, gemäss welcher ein Teil der zweiten Auflagefläche 34 teilweise auf der zweiten Auflagefläche 24 aufliegt, der an das zweite Ende 22 anschliesst. Die Zwischenposition liegt zwischen der Initialposition, gemäss welcher der Ringspalt eine maximale Spaltbreite aufweist und einer Finalposition, gemäss welcher der Ringspalt eine minimale Spaltbreite aufweist.

Wenn die Druckkraft durch Lösen des Gewindestifts 2 wieder verringert wird, federt die Flexlippe 14 in ihre Ursprungsposition zurück und schiebt dabei den Bolzen 3 zurück in die Initialposition. Durch den Gegendruck der Flexlippe bewegt sich der Bolzen 3 unter Vergrösserung der Spaltbreite automatisch zurück in die Initialposition. Durch die von der Flexlippe 14 auf den Bolzen 3 wirkende Rückstellkraft kann immer eine exakte Position der Flexlippe 14 relativ zur ortsfesten Wand 13 sichergestellt werden, da der Bolzen 3 sich nur soweit zurückbewegen kann, wie es die gewählte Position des Gewindestifts 2 zulässt.

Der Gewindestift 2 kann in einem Winkel von maximal 30 Grad zur Radialrichtung angeordnet sein. Gemäss Fig. 1 oder Fig. 2 ist der Gewindestift in Radialrichtung angeordnet. Das heisst, dass die Gewindestiftmittenachse 15 in einer Ebene liegt, die senkrecht zur Längsachse 5 der Ringdüse 10 angeordnet ist. Selbstverständlich kann der Winkel, welchen die Gewindestiftmittenachse 15 mit der Längsachse 5 in der vorliegenden Schnittebene von 90 Grad abweichen, sie kann insbesondere um bis zu 30 Grad von der senkrechten Stellung abweichen, was je nach Bauart der Ringdüse 10 einen erleichterten Zugang zu den Gewindestiften 2 ermöglicht.

Gemäss dieses Ausführungsbeispiels ist der Bolzen 3 in einem Winkel zur Flexlippe angeordnet, wobei die Bolzenmittenachse 35 mit der in der Darstellung oberen Schnittkante der Flexlippe 14 einen Winkel von maximal 45 Grad einschliesst. Der Bolzen 3 weist ein erstes Ende 31 und ein zweites Ende 32 auf, wobei das erste Ende 31 mit einer ersten Auflagefläche 33 in Kontakt mit der Flexlippe 14 steht. Die Auflagefläche 33 ist gemäss dieses Ausführungsbeispiels kleiner als in den nachfolgenden Ausführungsbeispielen, da der Bolzen 3 an seinem ersten Ende einen konischen Abschnitt aufweist. Es ist selbstverständlich auch möglich, dass der konische Abschnitt spitz zuläuft, allerdings ist die Flächenpressung auf die Flexlippe 14 am Berührungspunkt sehr hoch, sodass gegebenenfalls eine Oberflächenbehandlung der Flexlippe im Kontaktbereich erfolgen muss.

Der Gewindestift 2 kann in einem Winkel von maximal 30 Grad zur Radialrichtung angeordnet sein. Gemäss Fig. 7 ist der Gewindestift in Radialrichtung angeordnet. Das heisst, dass die Gewindestiftmittenachse 15 in einer Ebene liegt, die senkrecht zur Längsachse 5 der Ringdüse 10 angeordnet ist. Selbstverständlich kann der Winkel, welchen die Gewindestiftmittenachse 15 mit der Längsachse 5 in der vorliegenden Schnittebene von 90 Grad abweichen, sie kann insbesondere um bis zu 30 Grad von der senkrechten Stellung abweichen, was je nach Bauart der Ringdüse 10 einen erleichterten Zugang zu den Gewindestiften 2 ermöglicht. Gemäss eines Ausführungsbeispiels ist der Bolzen 3 um bis zu 10 mm in der zweiten Bohrung 16 verschiebbar. Gemäss eines Ausführungsbeispiels ist der Bolzen 3 mm bis zu 10 mm in der zweiten Bohrung 16 verschiebbar.

Fig. 2 zeigt eine Ansicht einer Ringdüse 10, welche einen Düsenkörper 11 umfasst, der einen Ringspalt 12 enthält, durch welchen im Betriebszustand ein fluides Medium, beispielsweise eine Kunststoffschmelze, austritt. Der Ringspalt 12 ist zwischen einer ortsfesten Wand 13 eines Zentralkörpers 8 und einer Flexlippe 14 angeordnet. Eine Mehrzahl an Gewindestiften 2 ist am Umfang des Düsenkörpers 11 angeordnet. Die Anzahl der Gewindestifte 2 sowie der zugehörigen Bolzen, die in dieser Darstellung nicht sichtbar sind, beträgt je mindestens 10. Gemäss des in Fig. 2 dargestellten Ausführungsbeispiels ist die Flexlippe 14 als ein Ringelement ausgebildet. Zwischen der ortsfesten Wand 13 des Zentralkörpers 8 und dem Ringelement erstreckt sich ein Kanal 17 für ein fluides Medium.

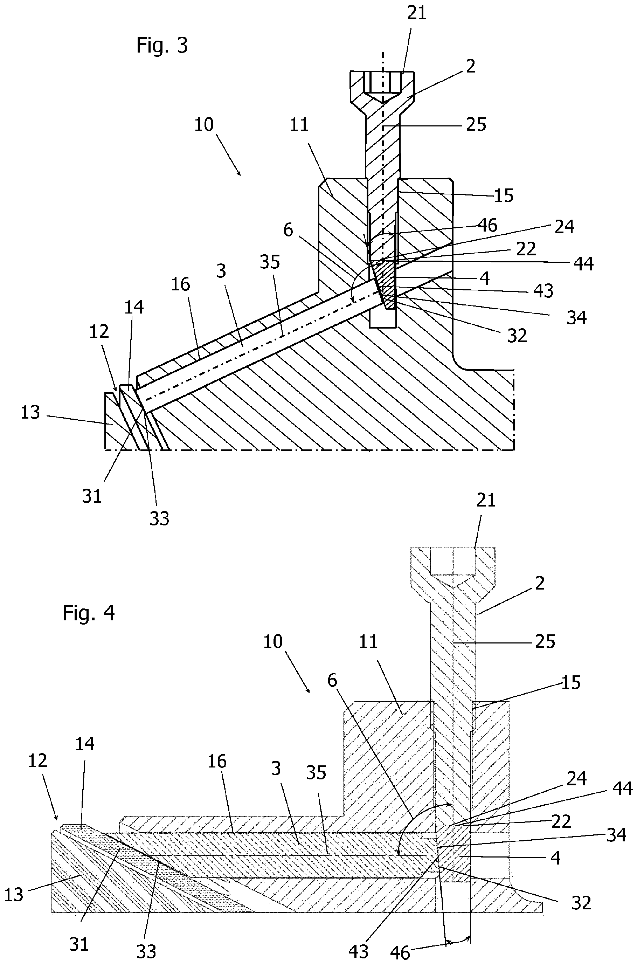

Fig. 3 zeigt einen Teilschnitt durch eine erfindungsgemässe Ringdüse 10 nach einem zweiten Ausführungsbeispiel. Gleiche oder gleichwirkende Bauteile sind mit denselben Bezugszeichen versehen wie im vorhergehend beschriebenen Ausführungsbeispiel. Die Ringdüse 10 enthält einen Düsenkörper 11, von welchem ein Ausschnitt dargestellt ist. Der Düsenkörper 11 umfasst mindestens einen Ringspalt 12 zum Austritt einer Folie, wobei der Ringspalt 12 von einer ortfesten Wand 13 und einer Flexlippe 14 seitlich begrenzt ist. Im Düsenkörper 11 ist eine Mehrzahl von Gewindestiften 2 und eine entsprechende Anzahl Bolzen 3 angeordnet, wobei jeder der Gewindestifte 2 in einer ersten Bohrung 15 im Düsenkörper 11 drehbar gelagert ist. In der vorliegenden Darstellung ist nur ein einziger Gewindestift 2 gezeigt, die dahinter liegenden Gewindestifte 2 sind in dieser Darstellung der Einfachheit halber weggelassen.

Jeder der Bolzen 3 ist im Düsenkörper 11 in einer zweiten Bohrung 16 des Düsenkörpers 11 verschiebbar gelagert. Der Bolzen 3 ist mit der Flexlippe 14 und dem entsprechenden Gewindestift 2 über ein Keilelement 4 in Kontakt. Eine Druckkraft ist vom Gewindestift 2 auf das Keilelement 4, vom Keilelement 4 auf den Bolzen 3 und über den Bolzen 3 auf die Flexlippe 14 übertragbar. Der Gewindestift 2 drückt auf das Keilelement 4 und der Bolzen 3 drückt auf die Flexlippe 14, um deren Position relativ zur ortsfesten Wand 13 zu verändern. Daher liegt der Bolzen 3 auf der Flexlippe 14 auf, der Bolzen 3 ist aber mit der Flexlippe 14 nicht verbunden, das heisst, es besteht keine stoffliche Verbindung zwischen dem Bolzen 3 und der Flexlippe 14. Der Bolzen 3 und das Keilelement 4 liegen ebenfalls aneinander an. Der Bolzen 3 ist ebenfalls nicht mit dem Keilelement 4 verbunden, das heisst, es besteht keine stoffliche Verbindung zwischen dem Bolzen 3 und dem Keilelement 4. Das Keilelement 4 und der Gewindestift 2 liegen ebenfalls aneinander an. Der Gewindestift 2 ist ebenfalls nicht mit dem Keilelement 4 verbunden, das heisst, es besteht keine stoffliche Verbindung zwischen dem Gewindestift 2 und dem Keilelement 4.

Gemäss des vorliegenden Ausführungsbeispiels weist der Bolzen 3 ein erstes Ende 31 enthaltend eine erste Auflagefläche 33 und ein zweites Ende 32 enthaltend eine zweite Auflagefläche 34 auf. Die erste Auflagefläche 33 liegt auf der Flexlippe 14 auf und die zweite Auflagefläche 34 liegt zumindest teilweise entlang einer gemeinsamen Berührungslinie am Keilelement 4 an.

Insbesondere sind der Bolzen 3 und das Keilelement 4 in einem stumpfen Winkel 6 zueinander angeordnet. Der Bolzen 3 und der Gewindestift 2 sind insbesondere als rotationssymmetrische Bauteile ausgebildet. Der Bolzen 3 weist eine Bolzenmittenachse 35 auf, wenn er als rotationssymmetrisches Bauteil ausgebildet ist. Der Gewindestift 2 weist eine Gewindestiftmittenachse 25 auf, wenn er als rotationssymmetrisches Bauteil ausgebildet ist. Gemäss dieses Ausführungsbeispiels spannen die Bolzenmittenachse 35 und die Gewindestiftmittenachse 25 eine gemeinsame Ebene auf, die in Fig. 4 der Schnittebene für den dargestellten Gewindestift 2 und den entsprechenden Bolzen 3 entspricht. Der Winkel 6 kann im Bereich von 90 Grad bis maximal 180 Grad liegen. Durch den Winkel 6 zwischen dem Gewindestift 2 und dem Bolzen 3 kann zudem der Vorschubweg beliebig definiert werden.

Der Gewindestift umfasst ein erstes Ende 21 und ein gegenüberliegendes zweites Ende 22. Das erste Ende 21 ist ausgebildet, um mit einem Werkzeug, im vorliegenden Beispiel, mit einem Inbusschlüssel, eine Drehbewegung um die als Drehachse wirkende Gewindestiftmittenachse 25 auszuführen. Die erste Bohrung 15 weist ein Innengewinde auf, welches mit einem am Umfang des Gewindestifts 2 befindlichen Aussengewinde in Eingriff steht.

Der Gewindestift 2 kann im Bereich des zweiten Endes 22 insbesondere eine als ebene Fläche ausgebildete zweite Auflagefläche 24 aufweisen, welche zur Auflage einer zweiten Auflagefläche 44 des Keilelements 4 ausgebildet ist. Gemäss eines nicht dargestellten Ausführungsbeispiels können am Keilelement 4 und am zweiten Ende 22 des Gewindestifts Eingriffselemente vorgesehen sein, um die korrekte Ausrichtung des Keilelements 4 in der ersten Bohrung 15 sicherzustellen.

Je steiler der Keilwinkel 46 des Keilelements 4 gewählt wird, desto exakter kann die Einstellung der Spaltbreite des Ringspalts 12 vorgenommen werden. Der Keilwinkel 46 kann insbesondere im Bereich von 10 Grad bis 75 Grad liegen. Gemäss eines Ausführungsbeispiels beträgt der Keilwinkel 10 bis 50 Grad. Gemäss eines Ausführungsbeispiels beträgt der Keilwinkel 10 bis 40 Grad. Insbesondere entspricht die Ausrichtung der Keilfläche 43 der Ausrichtung der zweiten Auflagefläche 34 des Bolzens 3, sodass ein flächenförmiger Kontakt zwischen der zweiten Auflagefläche 34 des Bolzens 3 und der Keilfläche 43 ermöglicht ist. Mittels des Keilelements 4 kann auch verhindert werden, dass der Bolzen 3 aus zweiten Bohrung 16 ausgeschoben wird, wenn die Bohrung 16 als Durchgangsbohrung ausgebildet ist. Insbesondere weist der Bolzen 3 einen kreisförmigen Querschnitt auf.

Fig. 4 zeigt einen Teilschnitt durch eine erfindungsgemässe Ringdüse 10 nach einem dritten Ausführungsbeispiel. Gleiche oder gleichwirkende Bauteile sind mit denselben Bezugszeichen versehen wie im vorhergehend beschriebenen Ausführungsbeispiel. Die Ringdüse 10 enthält einen Düsenkörper 11, von welchem ein Ausschnitt dargestellt ist. Der Düsenkörper 11 umfasst mindestens einen Ringspalt 12 zum Austritt einer Folie, wobei der Ringspalt 12 von einer ortfesten Wand 13 und einer Flexlippe 14 seitlich begrenzt ist. Im Düsenkörper 11 ist eine Mehrzahl von Gewindestiften 2 und eine entsprechende Anzahl Bolzen 3 angeordnet, wobei jeder der Gewindestifte 2 in einer ersten Bohrung 15 im Düsenkörper 11 drehbar gelagert ist. In der vorliegenden Darstellung ist nur ein einziger Gewindestift 2 gezeigt, die dahinter liegenden Gewindestifte 2 sind in dieser Darstellung der Einfachheit halber weggelassen.

Jeder der Bolzen 3 ist im Düsenkörper 11 in einer zweiten Bohrung 16 des Düsenkörpers 11 verschiebbar gelagert. Der Bolzen 3 ist mit der Flexlippe 14 und dem entsprechenden Gewindestift 2 über ein Keilelement 4 in Kontakt. Eine Druckkraft ist vom Gewindestift 2 auf das Keilelement 4, vom Keilelement 4 auf den Bolzen 3 und über den Bolzen 3 auf die Flexlippe 14 übertragbar. Der Gewindestift 2 drückt auf das Keilelement 4 und der Bolzen 3 drückt auf die Flexlippe 14, um deren Position relativ zur ortsfesten Wand 13 zu verändern. Daher liegt der Bolzen 3 auf der Flexlippe 14 auf, der Bolzen 3 ist aber mit der Flexlippe 14 nicht verbunden, das heisst, es besteht keine stoffliche Verbindung zwischen dem Bolzen 3 und der Flexlippe 14. Der Bolzen 3 und das Keilelement 4 liegen ebenfalls aneinander an. Der Bolzen 3 ist ebenfalls nicht mit dem Keilelement 4 verbunden, das heisst, es besteht keine stoffliche Verbindung zwischen dem Bolzen 3 und dem Keilelement 4. Das Keilelement 4 und der Gewindestift 2 liegen ebenfalls aneinander an. Der Gewindestift 2 ist ebenfalls nicht mit dem Keilelement 4 verbunden, das heisst, es besteht keine stoffliche Verbindung zwischen dem Gewindestift 2 und dem Keilelement 4.

Gemäss des vorliegenden Ausführungsbeispiels weist der Bolzen 3 ein erstes Ende 31 enthaltend eine erste Auflagefläche 33 und ein zweites Ende 32 enthaltend eine zweite Auflagefläche 34 auf. Die erste Auflagefläche 33 liegt auf der Flexlippe 14 auf und die zweite Auflagefläche 34 liegt zumindest teilweise entlang einer gemeinsamen Berührungslinie am Keilelement 4 an.

Gemäss des vorliegenden Ausführungsbeispiels sind der Bolzen 3 und das Keilelement 4 in einem rechten Winkel 6 zueinander angeordnet. Der Gewindestift 2 ist als rotationssymmetrisches Bauteil ausgebildet. Der Bolzen 3 weist eine Bolzenmittenachse 35 auf. Der Gewindestift 2 weist eine Gewindestiftmittenachse 25 auf. Gemäss dieses Ausführungsbeispiels spannen die Bolzenmittenachse 35 und die Gewindestiftmittenachse 25 eine gemeinsame Ebene auf, die in Fig. 4 der Schnittebene für den dargestellten Gewindestift 2 und den entsprechenden Bolzen 3 entspricht. Der Winkel 6 kann 90 Grad oder mehr betragen. Durch den Winkel 6 zwischen dem Gewindestift 2 und dem Bolzen 3 kann zudem der Vorschubweg beliebig definiert werden.

Der Gewindestift umfasst ein erstes Ende 21 und ein gegenüberliegendes zweites Ende 22. Das erste Ende 21 ist ausgebildet, um mit einem Werkzeug, im vorliegenden Beispiel, mit einem Inbusschlüssel, eine Drehbewegung um die als Drehachse wirkende Gewindestiftmittenachse 25 auszuführen. Die erste Bohrung 15 weist ein Innengewinde auf, welches mit einem am Umfang des Gewindestifts 2 befindlichen Aussengewinde in Eingriff steht.

Der Gewindestift 2 kann im Bereich des zweiten Endes 22 insbesondere eine als ebene Fläche ausgebildete zweite Auflagefläche 24 aufweisen, welche zur Auflage einer zweiten Auflagefläche 44 des Keilelements 4 ausgebildet ist. Gemäss eines nicht dargestellten Ausführungsbeispiels können am Keilelement 4 und am zweiten Ende 22 des Gewindestifts Eingriffselemente vorgesehen sein, um die korrekte Ausrichtung des Keilelements 4 in der ersten Bohrung 15 sicherzustellen.

Je steiler der Keilwinkel 46 des Keilelements 4 gewählt wird, desto exakter kann die Einstellung der Spaltbreite des Ringspalts 12 vorgenommen werden. Der Keilwinkel 46 kann insbesondere im Bereich von 10 Grad bis 75 Grad liegen. Gemäss eines Ausführungsbeispiels beträgt der Keilwinkel 10 bis 50 Grad. Gemäss eines Ausführungsbeispiels beträgt der Keilwinkel 10 bis 40 Grad. Insbesondere entspricht die Ausrichtung der Keilfläche 43 der Ausrichtung der zweiten Auflagefläche 34 des Bolzens 3, sodass ein flächenförmiger Kontakt zwischen der zweiten Auflagefläche 34 des Bolzens 3 und der Keilfläche 43 ermöglicht ist. Mittels des Keilelements 4 kann auch verhindert werden, dass der Bolzen 3 aus zweiten Bohrung 16 ausgeschoben wird, wenn die Bohrung 16 als Durchgangsbohrung ausgebildet ist. Insbesondere weist der Bolzen 3 einen kreisförmigen Querschnitt auf.

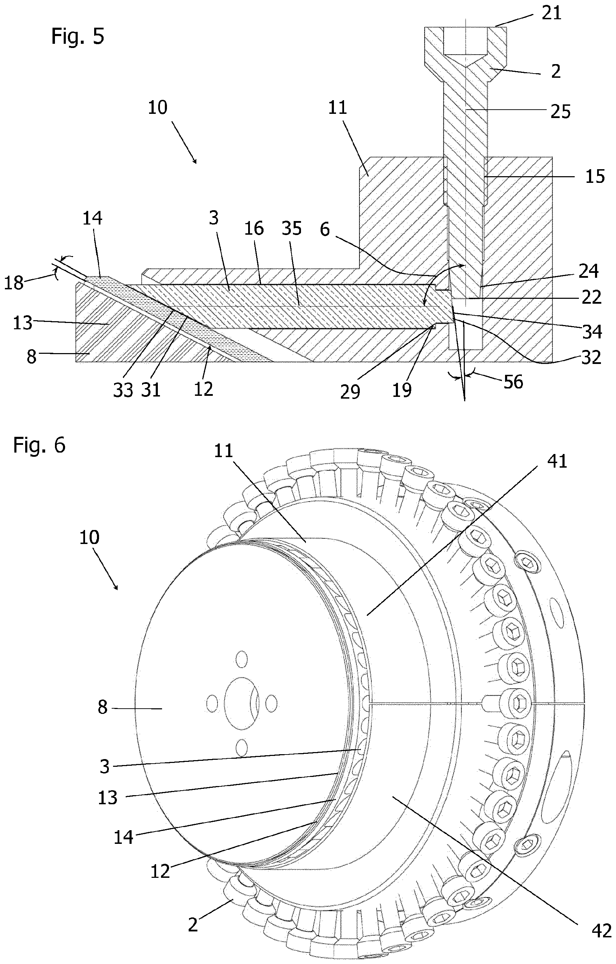

Fig. 5 zeigt einen Teilschnitt durch eine erfindungsgemässe Ringdüse 10 nach einem vierten Ausführungsbeispiel. Gleiche oder gleichwirkende Bauteile sind mit denselben Bezugszeichen versehen wie in den vorhergehend beschriebenen Ausführungsbeispielen. Die Ringdüse 10 enthält einen Düsenkörper 11, von welchem ein Ausschnitt dargestellt ist. Der Düsenkörper 11 umfasst mindestens einen Ringspalt 12 zum Austritt einer Folie, wobei der Ringspalt 12 von einer ortfesten Wand 13 eines Zentralkörpers 8 und einer Flexlippe 14 seitlich begrenzt ist. Im Düsenkörper 11 ist eine Mehrzahl von Gewindestiften 2 und eine entsprechende Anzahl Bolzen 3 angeordnet, wobei jeder der Gewindestifte 2 in einer ersten Bohrung 15 im Düsenkörper 11 drehbar gelagert ist. In der vorliegenden Darstellung ist nur ein einziger Gewindestift 2 gezeigt, die dahinter liegenden Gewindestifte 2 sind in dieser Darstellung der Einfachheit halber weggelassen.

Jeder der Bolzen 3 ist im Düsenkörper 11 in einer zweiten Bohrung 16 des Düsenkörpers 11 verschiebbar gelagert. Der Bolzen 3 ist mit der Flexlippe 14 und dem entsprechenden Gewindestift 2 in Kontakt. Eine Druckkraft ist vom Gewindestift 2 auf den Bolzen 3 und über den Bolzen 3 auf die Flexlippe 14 übertragbar. Der Gewindestift 2 drückt auf den Bolzen 3 und der Bolzen 3 drückt auf die Flexlippe 14, um deren Position relativ zur ortsfesten Wand 13 zu verändern. Daher liegt der Bolzen 3 auf der Flexlippe 14 auf, der Bolzen 3 ist aber mit der Flexlippe 14 nicht verbunden, das heisst, es besteht keine stoffliche Verbindung zwischen dem Bolzen 3 und der Flexlippe 14. Der Bolzen 3 und der Gewindestift 2 liegen ebenfalls aneinander an. Der Gewindestift 2 ist ebenfalls nicht mit dem Bolzen 3 verbunden, das heisst, es besteht keine stoffliche Verbindung zwischen dem Gewindestift 2 und dem Bolzen 3.

Gemäss des vorliegenden Ausführungsbeispiels weist der Bolzen 3 ein erstes Ende 31 enthaltend eine erste Auflagefläche 33 und ein zweites Ende 32 enthaltend eine zweite Auflagefläche 34 auf. Die erste Auflagefläche 33 liegt auf der Flexlippe 14 auf und die zweite Auflagefläche 34 liegt zumindest teilweise entlang einer gemeinsamen Berührungslinie am Gewindestift 2 an.

Gemäss des vorliegenden Ausführungsbeispiels sind der Bolzen 3 und der Gewindestift in einem rechten Winkel 6 zueinander angeordnet. Der Gewindestift 2 ist als rotationssymmetrisches Bauteil ausgebildet. Der Bolzen 3 weist eine Bolzenmittenachse 35 auf. Der Gewindestift 2 weist eine Gewindestiftmittenachse 25 auf. Gemäss dieses Ausführungsbeispiels spannen die Bolzenmittenachse 35 und die Gewindestiftmittenachse 25 eine gemeinsame Ebene auf, die in Fig. 5 der Schnittebene für den dargestellten Gewindestift 2 und den entsprechenden Bolzen 3 entspricht. Der Winkel 6 kann 90 Grad betragen oder wie in den ersten und zweiten Ausführungsbeispielen gezeigt, als stumpfer Winkel ausgebildet sein, d.h. im Bereich von 100 Grad bis 180 Grad liegen. Durch den Winkel 6 zwischen dem Gewindestift 2 und dem Bolzen 3 kann zudem der Vorschubweg beliebig definiert werden.

Der Gewindestift umfasst ein erstes Ende 21 und ein gegenüberliegendes zweites Ende 22. Das erste Ende 21 ist ausgebildet, um mit einem Werkzeug, im vorliegenden Beispiel, mit einem Inbusschlüssel, eine Drehbewegung um die als Drehachse wirkende Gewindestiftmittenachse 25 auszuführen. Die erste Bohrung 15 weist ein Innengewinde auf, welches mit einem am Umfang des Gewindestifts 2 befindlichen Aussengewinde in Eingriff steht.

Der Gewindestift 2 kann im Bereich des zweiten Endes 22 insbesondere eine als konischer Abschnitt ausgebildete zweite Auflagefläche 24 aufweisen, welche zur Auflage einer zweiten Auflagefläche 34 des Bolzens 3 ausgebildet ist. Gemäss des dargestellten Ausführungsbeispiels entspricht die Neigung des konischen Abschnitts des zweiten Endes 22 der Neigung der zweiten Auflagefläche 34 des Bolzens 3.

Je steiler der Winkel des konischen Abschnitts gewählt wird, desto exakter kann die Einstellung der Spaltbreite des Ringspalts 12 vorgenommen werden. Der Winkel 56, den der konische Abschnitt mit der Gewindestiftmittenachse 15 einschliesst, kann insbesondere im Bereich bis einschliesslich 40 Grad liegen. Gemäss eines Ausführungsbeispiels beträgt der Winkel bis einschliesslich 30 Grad. Gemäss eines Ausführungsbeispiels beträgt der Winkel bis einschliesslich 20 Grad. Der Winkel 56 entspricht dem halben Konuswinkel 26 gemäss Fig. 1. Insbesondere entspricht die Ausrichtung der Auflagefläche der Ausrichtung der zweiten Auflagefläche 34 des Bolzens 3, sodass ein linienförmiger Kontakt zwischen der zweiten Auflagefläche 34 des Bolzens 3 und der Auflagefläche 24 ermöglicht ist. Insbesondere weist der Bolzen 3 einen kreisförmigen Querschnitt auf.

Der Bolzen 3 kann einen Absatz 29 aufweisen, der in einem Anschlag 19 des Düsenkörpers 11 aufgenommen sein kann. Dieser Absatz 29 verhindert, dass das zweite Ende 32 des Bolzens zu weit in die Bohrung 15 für den Gewindestift 2 hineinragen kann, sodass der Bolzen die Bewegung des Gewindestifts 2 in Richtung des Bohrungsgrunds nicht behindern oder verhindern kann.

Fig. 6 zeigt eine Ansicht der Ringdüse 10 nach dem dritten oder vierten Ausführungsbeispiel, welche einen Düsenkörper 11 umfasst, der einen Ringspalt 12 enthält, durch welchen im Betriebszustand ein fluides Medium, beispielsweise eine Kunststoffschmelze, austritt. Der Ringspalt 12 ist zwischen einer ortsfesten Wand 13 eines Zentralkörpers 8 und einer Flexlippe 14 angeordnet. Eine Mehrzahl an Gewindestiften 2 ist am Umfang des Düsenkörpers 11 angeordnet. Die Anzahl der Gewindestifte 2 sowie der zugehörigen Bolzen, die in dieser Darstellung nicht sichtbar sind, beträgt je mindestens 10. Der Düsenkörper 11 ist gemäss dieses Ausführungsbeispiels zweiteilig ausgebildet, sodass die Bohrungen 16 für die Bolzen 3 hergestellt werden können und die Bolzen in die entsprechenden Bohrungen 16 eingeführt werden können, bevor der entsprechende Düsenkörperabschnitt 41, 42 des Düsenkörpers 11 auf der Flexlippe 13 positioniert werden kann. Der Düsenkörper 11 könnte gemäss eines nicht dargestellten Ausführungsbeispiels auch mehrteilig ausgebildet sein, das heisst, aus mehr als zwei Teilkörpern bestehen.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Ringdüse (10), enthaltend einen Düsenkörper (11), wobei der Düsenkörper (11) mindestens einen Ringspalt (12) zum Austritt einer Folie umfasst, wobei der Ringspalt (12) von einer ortfesten Wand (13) und einer Flexlippe (14) seitlich begrenzt ist, wobei im Düsenkörper (11) eine Mehrzahl von Gewindestiften (2) und eine Mehrzahl von Bolzen (3) angeordnet ist, wobei die Gewindestifte in einer ersten Bohrung (15) im Düsenkörper (11) drehbar gelagert sind, wobei die Bolzen (3) im Düsenkörper (11) in einer zweiten Bohrung (16) des Düsenkörpers (11) verschiebbar gelagert sind, **dadurch gekennzeichnet, dass** jeder der Bolzen (3) mit der Flexlippe (14) und dem entsprechenden Gewindestift (2) in Kontakt ist, sodass eine Druckkraft vom Gewindestift (2) auf den entsprechenden Bolzen (3) und über den Bolzen (3) auf die Flexlippe (14) übertragbar ist, wobei der Bolzen (3) ein erstes Ende (31) enthaltend eine erste Auflagefläche (33) und ein zweites Ende (32) enthaltend eine zweite Auflagefläche (34) aufweist, wobei die erste Auflagefläche (33) mindestens teilweise auf der Flexlippe (14) aufliegt und die zweite Auflagefläche (34) zumindest teilweise entlang einer gemeinsamen Berührungslinie am Gewindestift (2) anliegt oder auf einer Keilfläche eines Keilelements aufliegt.

2. Ringdüse nach Anspruch 1, wobei der Bolzen (3) und der Gewindestift (2) in einem Winkel (6) zueinander angeordnet sind.

3. Ringdüse nach Anspruch 2, wobei der Winkel (6) 90 Grad bis maximal 180 Grad beträgt.

4. Ringdüse nach einem der vorhergehenden Ansprüche, wobei die Gewindestifte (2) in äquidistanten Abständen zueinander am Umfang des Düsenkörpers (11) angeordnet sind.

5. Ringdüse nach einem der vorhergehenden Ansprüche, wobei die Anzahl der Gewindestifte (2) sowie der zugehörigen Bolzen (3) mindestens je 10 beträgt.

6. Ringdüse nach einem der vorhergehenden Ansprüche, wobei jeder der Gewindestifte (2) in einem Winkel von maximal 30 Grad zur Radialrichtung angeordnet ist.

7. Ringdüse nach einem der vorhergehenden Ansprüche, wobei jeder der Bolzen (3) senkrecht zur Flexlippe (14) mit einer Abweichung von maximal 30 Grad von der Senkrechten zur Flexlippe (14) angeordnet ist.

8. Ringdüse nach einem der vorhergehenden Ansprüche, wobei jeder der Bolzen (3) um bis zu 10 mm in der Bohrung verschiebbar ist.

9. Ringdüse nach einem der vorhergehenden Ansprüche, wobei jeder der Gewindestifte (2) ein Ende aufweist, welches einen konischen Abschnitt enthält.

10. Ringdüse nach Anspruch 9, wobei der Konus einen Konuswinkel aufweist, der im Bereich von 10 Grad bis einschliesslich 80 Grad liegt.

11. Ringdüse nach einem der vorhergehenden Ansprüche, wobei die zweite Bohrung (16) einen Anschlag enthält, mittels welchem der Verschiebeweg des Bolzens (3) begrenzbar ist.

12. Ringdüse nach einem der vorhergehenden Ansprüche, wobei der Bolzen (3) einen Absatz (29) enthält.

13. Ringdüse nach einem der vorhergehenden Ansprüche, wobei der Bolzen (3) einen kreisförmigen Querschnitt aufweist.

14. Verwendung einer Ringdüse (10) nach einem der vorhergehenden Ansprüche zur Herstellung einer geschäumten Kunststofffolie.

## Claims

1. An annular nozzle (10) containing a nozzle body (11), the nozzle body (11) comprising at least one annular gap (12) for the discharge of a film, the annular gap (12) being laterally bounded by a stationary wall (13) and a flexible lip (14), a plurality of threaded pins (2) and a plurality of bolts (3) being arranged in the nozzle body (11), wherein the threaded pins are rotatably mounted in a first bore (15) in the nozzle body (11), wherein the bolts (3) in the nozzle body (11) are slidably mounted in a second bore (16) in the nozzle body, **characterized in that** each of the bolts (3) is in contact with the flexible lip (14) and the corresponding threaded pin (2), so that a compressive force can be transmitted from the threaded pin (2) to the corresponding bolt (3) and via the bolt (3) to the flexible lip (14), wherein the bolt (3) has a first end (31) containing a first bearing surface (33) and a second end (32) containing a second bearing surface (34), wherein the first bearing surface (33) rests at least partially on the flexible lip (14) and the second bearing surface (34) rests at least partially along a common line of contact on the threaded pin (2) or rests on a wedge surface of a wedge element.

2. The annular nozzle of claim 1, wherein the bolt (3) and the threaded pin (2) are arranged at an angle (6) with respect to each other.

3. The annular nozzle of claim 2, wherein the angle (6) is 90 degrees up to and including a maximum of 180 degrees.

4. The annular nozzle of one of the preceding claims, wherein the threaded pins (2) are arranged at equidistant intervals from one another on the circumference of the nozzle body (11).

5. The annular nozzle of one of the preceding claims, wherein the number of each of the threaded pins (2) and the associated bolts (3) is at least 10.

6. The annular nozzle of one of the preceding claims, wherein each of the threaded pins (2) is arranged at an angle of at most 30 degrees with respect to the radial direction.

7. The annular nozzle of one of the preceding claims, wherein each of the bolts (3) is arranged perpendicular to the flexible lip (14) with a maximum deviation of 30 degrees from the perpendicular direction with respect to the flexible lip (14).

8. The annular nozzle of one of the preceding claims, wherein each of the bolts (3) can be displaced in the bore by up to 10 mm.

9. The annular nozzle of one of the preceding claims, wherein each of the threaded pins (2) is provided with an end which contains a conical section.

10. The annular nozzle of claim 9, wherein the cone has a cone angle which is in the range of 10 degrees up to and including 80 degrees.

11. The annular nozzle of one of the preceding claims, wherein the second bore (16) contains a stop by means of which the displacement path of the bolt (3) can be limited.

12. The annular nozzle of one of the preceding claims, wherein the bolt (3) contains a shoulder (29).

13. The annular nozzle of one of the preceding claims, wherein the bolt (3) has a circular cross section.

14. Use of the annular nozzle (10) of one of the preceding claims for the production of a foamed plastic film.

## Revendications

1. Buse annulaire (10) contenant un corps de buse (11), le corps de buse (11) comprenant au moins un espace annulaire (12) pour la décharge d'un film, l'espace annulaire (12) étant délimité latéralement par une paroi fixe (13) et une lèvre flexible (14), une pluralité de tiges filetées (2) et une pluralité de boulons (3) étant disposées dans le corps de buse (11), dans lequel les tiges filetées sont montées rotatives dans un premier alésage (15) du corps de buse (11), dans lequel les boulons (3) du corps de buse (11) sont montés coulissants dans un deuxième alésage (16) du corps de buse, **caractérisé en ce que** chacun des boulons (3) est en contact avec la lèvre flexible (14) et la tige filetée correspondante (2), de sorte qu'une force de compression peut être transmise de la tige filetée (2) au boulon (3) correspondant et par le boulon (3) à la lèvre flexible (14), le boulon (3) ayant une première extrémité (31) contenant une première surface d'appui (33) et une deuxième extrémité (32) contenant une deuxième surface d'appui (34), dans lequel la première surface d'appui (33) repose au moins partiellement sur la lèvre flexible (14) et la deuxième surface d'appui (34) repose au moins partiellement le long d'une ligne de contact commune sur la tige filetée (2) ou repose sur une surface de calage d'un élément de calage.

2. La buse annulaire de la revendication 1, dans laquelle le boulon (3) et la tige filetée (2) sont disposés à un angle (6) l'un par rapport à l'autre.

3. La buse annulaire de la revendication 2, dans laquelle l'angle (6) est de 90 degrés jusqu'à un maximum de 180 degrés.

4. La buse annulaire de l'une des revendications précédentes, dans laquelle les tiges filetées (2) sont disposées à intervalles équidistants les unes des autres sur la circonférence du corps de la buse (11).

5. La buse annulaire de l'une des revendications précédentes, dans laquelle le nombre de chacune des tiges filetées (2) et des boulons associés (3) est d'au moins 10.

6. La buse annulaire de l'une des revendications précédentes, dans laquelle chacune des tiges filetées (2) est disposée à un angle d'au plus 30 degrés par rapport à la direction radiale.

7. La buse annulaire de l'une des revendications précédentes, dans laquelle chacun des boulons (3) est disposé perpendiculairement à la lèvre flexible (14) avec une déviation maximale de 30 degrés par rapport à la direction perpendiculaire à la lèvre flexible (14).

8. La buse annulaire de l'une des revendications précédentes, dans laquelle chacun des boulons (3) peut être déplacé dans l'alésage jusqu'à 10 mm.

9. La buse annulaire de l'une des revendications précédentes, dans laquelle chacune des tiges filetées (2) est pourvue d'une extrémité contenant une section conique.

10. La buse annulaire de la revendication 9, dans laquelle le cône a un angle compris entre 10 et 80 degrés.

11. La buse annulaire de l'une des revendications précédentes, dans laquelle le deuxième alésage (16) contient une butée permettant de limiter la course de déplacement du boulon (3).

12. La buse annulaire de l'une des revendications précédentes, dans laquelle le boulon (3) comporte un épaulement (29).

13. La buse annulaire de l'une des revendications précédentes, dans laquelle le boulon (3) a une section transversale circulaire.

14. Utilisation de la buse annulaire (10) de l'une des revendications précédentes pour la production d'un film plastique moussé.
